# EUROPÄISCHE PATENTSCHRIFT

(11) **EP 0 414 940 B1**
(45) Veröffentlichungstag und Bekanntmachung des Hinweises auf die Patenterteilung: **27.10.1993**
(21) Anmeldenummer: 89116026.9
(22) Anmeldetag: 30.08.1989
(51) Int. Cl.: B60H 1/00, G05D 3/12, F24F 11/02

(54) **Stellantrieb**
Drive for positioning equipment
Dispositif de commande de la position d'un équipement

(43) Veröffentlichungstag der Anmeldung: 06.03.1991
(73) Patentinhaber: SIEMENS AKTIENGESELLSCHAFT, 80333 München (DE)
(72) Erfinder: Schramm, Michael, Dipl.-Ing. (FH), D-8632 Neustadt (DE)

(56) Entgegenhaltungen:
- DE-A- 3 701 818
- DE-C- 699 619
- DE-U- 7 138 451
- FR-A- 2 407 562
- GB-A- 655 767
- PATENT ABSTRACTS OF JAPAN, Band 7, Nr. 9 (M-185)[1154], 14. Januar 1983;& JP-A-57 167 817 (NIPPON DENSO K.K.) 15-10-1982

## Beschreibung

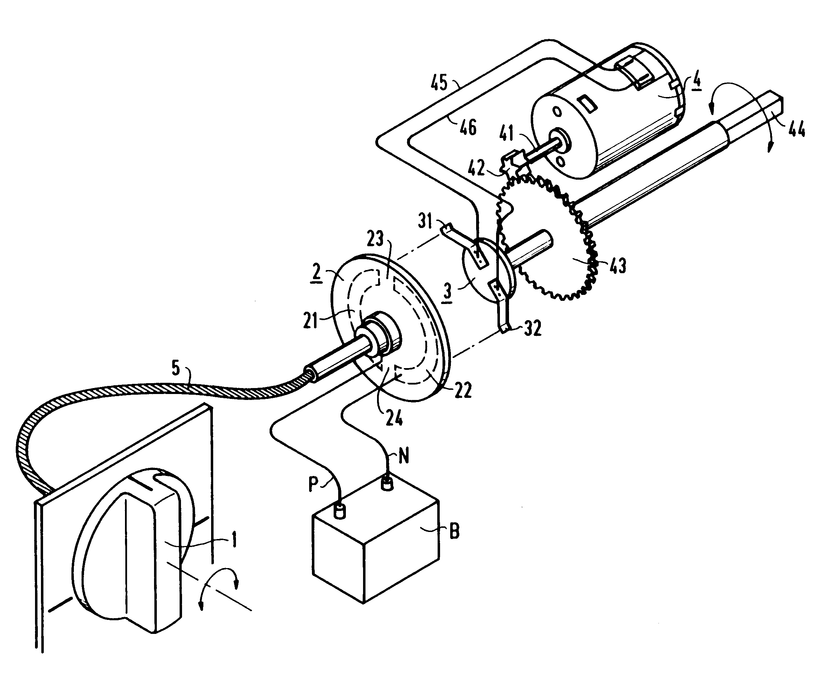

Die Erfindung bezieht sich auf einen Stellantrieb gemäß Oberbegriff des Anspruchs 1; ein derartiger Stellantrieb ist durch die DE-A-37 01 818, FIG 6 bekannt.

Im bekannten Fall der DE-A-37 01 818 wird die Schleifkontaktvorrichtung durch eine in Mitnahmeverbindung mit der Rotorwelle stehende, an die Batterie angeschlossene Basisplatte mit einem Schaltungsmuster aus fünf Schleifbahnen und einem konzentrisch zum Drehpunkt der Basisplatte durch das Stellglied betätigbaren Stellhebel mit den Schleifbahnen zugeordneten Gleitkontakten gebildet, wobei die Basisplatte ihre Schwenkbewegung stoppt, wenn sich die Gleitkontakte auf einem Polaritätswechselpunkt des Schaltungsmusters befinden, und die Basisplatte verschwenkt, um die Gleitkontakte auf diesen Polaritätswechselpunkt zu bringen, wenn sich die Gleitkontakte von dem Polaritätswechselpunkt entfernt befinden.

Bei einer weiteren, durch die DE-A-37 01 818 bekannten Vorrichtung zum Bewegen einer Klappe in einer Klimaanlage werden von einem linear bewegbaren Bedienknopf zur Einstellung einer Temperatur ein Schiebepotentiometer bewegt und ein entsprechender Widerstandswert an eine u.a. einen Komparator enthaltende elektronische Steuerschaltung weitergegeben, von der solange ein Speisestrom für einen die Luftverteilungsklappe betätigenden Elektromotor durchgesteuert wird, bis ein mit dessen Rotorwelle in Drehverbindung stehendes Potentiometer einen dem des Schiebepotentiometers gleichen Widerstandswert an den Komparator der elektronischen Steuerschaltung abgibt; der dadurch zum Stillstand kommende Elektromotor hat dann die Klappe in einer eingestellten Temperatur entsprechende Stellung gebracht.

Ein demgegenüber bei voll gewährleisteter Betriebssicherheit aufwandsärmerer und kleinbauenderer Stellantrieb kann gemäß vorliegender Erfindung durch die kennzeichnende Lehre des Anspruchs 1 erreicht werden.

Zweckmäßigerweise besteht die Schleifkontaktvorrichtung aus zwei auf gleichem Radius liegenden, teilkreisförmigen Schleifbahnen mit tangentialen Kontaktunterbrechungs-Zwischenräumen mit einer zumindest der Schleiffläche des korrespondierenden Schleifers entsprechenden Unterbrechungsbreite.

Die Erfindung sowie weitere vorteilhafte Ausgestaltungen der Erfindung werden im folgenden anhand eines schematisch dargestellten Ausführungsbeispieles in der Zeichnung näher erläutert.

An einem hier nicht näher dargestellten Bediengerät am Armaturenbrett eines Kraftfahrzeuges zur Einstellung z.B. der Temperatur eines Klimagerätes ist ein Dreh-Bedienknopf 1 vorgesehen, dessen Sollwert als Drehwinkelstellung über eine biegsame Welle 5 zu einer drehbaren Schleifbahn-Scheibe mit zwei auf gleichen Radius liegenden Schleifbahnen 21,22 übertragen wird. Anstelle der besonders zweckmäßigen biegsamen Welle können neben dem besonders kompakten direkten Anbau der Schleifbahnen an dem Dreh-Bedienknopf 1 als Übertragungsmittel z.B. auch eine Kardangelenk- oder Seilzugübertragung vorgesehen werden. Die eine Schleifbahn 21 ist an den einen Pol P, die andere Schleifbahn 22 an den anderen Pol N einer Kraftfahrzeug-Batterie B angeschlossen. Axial vor der Schleifbahn-Scheibe 2 liegt eine dazu konzentrisch drehbare Schleiferscheibe 3 mit zwei Schleifern 31 bzw.32 von denen jeder je einer der beiden Schleifscheiben 21 bzw.22 der Schleifbahn-Scheibe 2 zugeordnet ist. Die Schleifbahnen 21,22 der Schleifbahn-Scheibe 2 sind in Schleifkontaktrichtung durch leitungslose Unterbrechungen gegeneinander isoliert, die sich über einen solchen Bereich erstrecken, daß beim Beschleifen dieser Bereiche durch die Schleifer 31 bzw.33 keine Kontaktierungen zwischen den Schleifbahnen 21,22 untereinander und keine Stromverbindung von den Polen P,N der Batterie B zu beiden Schleifern 31,32 möglich ist.

Die Schleifer 31 bzw.32 sind mit Wicklungsanschlüssen 45,46 eines eine hier nicht dargestellte Luftklappe betätigenden Elektromotors 4 verbunden, der mit seiner Rotorwelle 41 über ein hier einstufig angenommenes Übersetzungsgetriebe mit den Getrieberädern 42,43 eine Abtriebswelle 44 verdreht, die an ihrem einen Ende die Schleiferscheibe 3 mit den Schleifern 31 bzw.32 trägt und an ihrem anderen Ende mit der schwenkbaren Luftverteilungsklappe koppelbar ist.

Bei Stromfluß von den Polen P,N der Batterie B über die Schleifbahn 21,22 und die diese kontaktierenden Schleifer 31,32 setzt sich der Elektromotor 4 in Bewegung und dreht über das Getriebe mit dem Rotorwellen-Zahnrad 42 und dem Zahnrad 43 der Abtriebswelle einerseits die Luftverteilungsklappe und andererseits die Schleifer 31,32 relativ zur stillstehenden Schleifbahn-Scheibe 2. Die Schleifer 31,32 werden solange gedreht, bis sie in den durch die Unterbrechung 23,24 gebildeten nichtleitenden Bereich der Schleifbahn-Scheibe 2 gelangen und damit den Strom zu den Wicklungsanschlüssen 45,46 des Elektromotors unterbrechen. Wird die Schleifbahn-Scheibe 2 durch Drehen des Dreh-Bedienknopfes 1 über die biegsame Welle 5 in eine neue Position relativ zu den zunächst ruhenden Schleifern 31,32 gedreht, erhält der Elektromotor 4 durch erneute Kontaktgabe zwischen den Schleifbahnen 21,22 einerseits und den Schleifern 31,32 andererseits wie der Strom und dreht die Schleifer 31,32 in die neue Position der nicht leitenden Bereiche 23,24.

Der mögliche Drehwinkel und somit große Verstellbereich beträgt maximal 180°. Im Stillstand, wenn also Soll- und Ist-Position übereinstimmen, ist der Motor stromlos und belastet somit nicht die Kraftfahrzeug-Batterie. Für den gesamten Stellantrieb ist keine gesonderte Steuerelektronik erforderlich und somit unempfindlich gegenüber Störimpulsen und Schwankungen in der Versorgungsspannung.

## Patentansprüche

1. Stellantrieb, insbesondere zur Betätigung einer Luftverteilungsklappe in einem Kraftfahrzeug-Klima- und/oder Belüftungsgerät, mit einem über eine Schleifkontaktvorrichtung (2;3) an eine Speisespannungsquelle (Batterie B) angeschlossenen Elektromotor (4), der in Nachführeinstellabhängigkeit von einer durch ein Stellglied (Dreh-Bedienknopf 1) vorgebbaren Stellgröße steht, wobei einerseits Schleifkontakte (Schleifbahnen 21,22) in Einstellverbindung mit dem Stellglied (Dreh-Bedienknopf 1) und andererseits Schleifkontakte (Schleifer 31,32) in Mitnahmeverbindung mit der Rotorwelle (41) des Elektromotors (4) gestellt sind, **gekennzeichnet** durch eine mit dem Dreh-Bedienknopf (1) in Drehabhängigkeit stehende Schleifbahnscheibe (2) mit zwei jeweils mit einem der beiden Pole (P bzw.N) der Batterie (B) in elektrischer Verbindung stehenden kreisbogenförmig verlaufenden Schleifbahnen (21 bzw.22) und zwei korrespondierenden, in Drehverbindung mit der Rotorwelle (41) des Elektromotors (4) stehenden, jeweils an einen der beiden Wicklungsanschlüsse (45 bzw.46) des Elektromotors (4) angeschlossenen Schleifern (31 bzw.32) bzw. alternativ durch zwei in Drehabhängigkeit von dem Dreh-Bedienknopf (1) stehenden, jeweils mit einem Pol (P bzw.N) der Batterie (B) in Verbindung stehenden Schleifern (31 bzw.32) und zwei korrespondierenden, in Drehverbindung mit der Rotorwelle (41) des Elektromotors (4) stehenden, jeweils an einen der beiden Wicklungsanschlüsse (45 bzw.46) des Elektromotors (4) angeschlossenen kreisbogenförmig verlaufenden Schleifbahnen (21 bzw. 22), wobei eine elektrische Kontaktunterbrechung zwischen den Schleifbahnen (21 bzw.22) einerseits und den Schleifern (31 bzw.32) andererseits bei Erreichen der vorgebbaren Stellgröße durch den nachführenden Elektromotor (4) vorgesehen ist.

2. Stellantrieb nach Anspruch 1, **gekennzeichnet** durch jeweils zwei mit gleichem Radius einander gegenüberliegenden teilkreisförmigen Schleifbahnen (21 bzw.22) mit tangentialen Kontaktunterbrechungs-Zwischenräumen mit einer zumindest der Schleiffläche des korrespondierenden Schleifers (31 bzw.32) entsprechenden Unterbrechungsbreite.

3. Stellantrieb nach Anspruch 1 bzw.2, **dadurch gekennzeichnet**, daß die Schleifbahnen (21 bzw.22) bzw. die Schleifer (31 bzw.32) über eine biegsame Welle (5) in Drehverbindung mit einem Dreh-Bedienknopf (1) als Stellglied für die vorgebbare Stellgröße stehen.

4. Stellantrieb nach Anspruch 1, **dadurch gekennzeichnet**, daß die Schleifbahnen (21 bzw.22) bzw. die Schleifer (31 bzw.32) integrierter Bestandteil des Dreh-Bedienknopfes (1) als Stellglied für die vorgebbare Stellgröße sind.

## Claims

1. Actuating drive, in particular for operating an air-distribution flap in a motor vehicle air-conditioning and/or ventilating device, having an electric motor (4) which by way of a sliding contact arrangement (2; 3) is connected to a supply voltage source (battery B) and which is in a tracking adjustment-dependent relationship with an actuating variable which can be preselected by an actuating element (rotary operating knob 1), in which, on the one hand, sliding contacts (slideways 21, 22) are connected, for adjustment, with the actuating element (rotary operating knob 1) and, on the other hand, sliding contacts (sliders 31, 32) are connected in a slaving manner with the rotor shaft (41) of the electric motor (4), characterised by a slideway disc (2) which is in a rotary dependent relationship with the rotary operating knob (1) having two slideways (21 and 22) which communicate electrically in each case with one of the two poles (P and N respectively) of the battery (B) and which extend in the shape of an arc of a circle and two corresponding sliders (31 and 32 respectively) which communicate in a rotary manner with the rotor shaft (41) of the electric motor (4) and are connected in each case to one of the two winding terminals (45 and 46 respectively) of the electric motor (4), or alternatively by two sliders (31 and 32) which are in a rotary dependent relationship with the rotary operating knob (1) and communicate in each case with a pole (P and N respectively) of the battery (B) and two corresponding slideways (21 and 22) which communicate in a rotary manner with the rotor shaft (41) of the electric motor (4), are connected in each case to one of the two winding terminals (45 and 46 respectively) of the electric motor (4) and extend in the shape of an arc of a circle, in which an electrical contact separation is provided between the slideways (21 and 22), on the one hand, and the sliders (31 and 32), on the other hand, when the preselectable actuating variable is reached by the tracking electric motor (4).

2. Actuating drive according to claim 1, characterised by in each case two part circle-shaped slideways (21 and 22), which lie opposite each other with the same radius, having tangential contact separation interspaces with a separation width which corresponds at least to the sliding surface of the corresponding slider (31 and 32 respectively).

3. Actuating drive according to claim 1 and 2, characterised in that the slideways (21 and 22) and the sliders (31 and 32) by way of a flexible shaft (5) communicate in a rotary manner with a rotary operating knob (1) as an actuating element for the preselectable actuating variable.

4. Actuating drive according to claim 1, characterised in that the slideways (21 and 22) and the sliders (31 and 32) respectively are integral parts of the rotary operating knob (1) as an actuating element for the preselectable actuating variable.

## Revendications

1. Dispositif de réglage, notamment pour l'actionnement d'un volet de répartition de l'air dans une installation de climatisation et/ou d'aération d'un véhicule automobile, comportant un moteur électrique (4), qui est raccordé par l'intermédiaire d'un dispositif à contact glissant (2;3) à une source de tension d'alimentation (batterie B) et dont le fonctionnement dépend, selon une relation d'asservissement, d'une grandeur de réglage pouvant être prédéterminée par un organe de réglage (bouton rotatif de commande 1), et dans lequel, d'une part, des contacts glissants (pistes de glissement 21, 22) sont raccordés, selon une liaison de réglage, à l'organe de réglage (bouton rotatif de commande 1), et, d'autre part, des contacts glissants (curseurs 31, 32) sont réunis selon une liaison d'entraînement à l'arbre (41) du rotor du moteur électrique (4), caractérisé par un disque (2) qui est raccordé selon une liaison de dépendance en rotation au bouton rotatif de commande (1) et comporte deux pistes de glissement (21 et 22), en forme d'arcs de cercle, qui sont raccordés respectivement à l'un des deux pôles (P ou N) de la batterie (B), et par deux curseurs correspondants (31,32), qui sont raccordés selon une liaison d'entraînement en rotation à l'arbre (41) du rotor du moteur électrique (14) et sont raccordés respectivement à l'une des deux bornes d'enroulement (45 et 46) du moteur électrique (14), ou sinon par deux curseurs (31 et 32), qui sont reliés selon une liaison de dépendance en rotation au bouton rotatif de commande (1) et sont raccordés respectivement à un pôle (P ou N) de la batterie (B), et par deux pistes de glissement correspondantes en forme d'arcs de cercle (21 et 22), qui sont raccordées selon une liaison d'entraînement en rotation à l'arbre (41) du rotor du moteur électrique (4) et sont reliées respectivement à l'une des deux bornes d'enroulement (45 ou 46) du rotor électrique (4), une interruption électrique des contacts étant prévue entre les pistes de glissement (21 et 22), d'une part, et les curseurs (31 et 32), d'autre part, lorsque le moteur électrique d'asservissement (4) atteint la grandeur de réglage qui peut être prédéterminée.

2. Dispositif de réglage suivant la revendication 1, caractérisé par respectivement deux pistes de glissement en forme d'éléments de cercles (21 et 22), qui sont situés respectivement en vis-à-vis avec le même rayon et comportant des espaces intermédiaires tangentiels d'interruption des contacts, et possédant une largeur d'interruption qui correspond au moins à la surface de glissement du curseur correspondant (31 ou 32).

3. Dispositif de réglage suivant la revendication 1 ou 2, caractérisé par le fait que les pistes de glissement (21 et 22) ou les curseurs (31 et 32) sont raccordés par l'intermédiaire d'un arbre flexible (5), selon une liaison en rotation, à un bouton rotatif de commande (1) formant organe de réglage pour la grandeur de réglage pouvant être prédéterminée.

4. Dispositif de réglage suivant la revendication 1, caractérisé par le fait que les pistes de glissement (21 et 22) et les curseurs (31 et 32) font partie intégrante du bouton rotatif de commande (1) utilisé comme organe de réglage pour la grandeur de réglage pouvant être prédéterminée.
